Europäisches Patentamt

European Patent Office

Office européen des brevets

(19)

(11) Publication number: **0 088 565**
**A1**

# EUROPEAN PATENT APPLICATION

(12)

(21) Application number: **83301001.0**

(22) Date of filing: **25.02.83**

(51) Int. Cl.³: **G 06 F 3/033**

(30) Priority: **27.02.82 JP 31497/82**

(43) Date of publication of application: **14.09.83**
**Bulletin 83/37**

(84) Designated Contracting States: **CH DE FR GB LI**

(71) Applicant: **Fanuc Ltd, 5-1, Asahigaoka, 3-chome, Hino-shi, Tokyo 191 (JP)**

(72) Inventor: **Kishi, Hajimu, Hinohirayamadai-Jutaku 1104 6-7-8, Asahigaoka, Hino-shi Tokyo (JP)**
Inventor: **Seki, Masaki, 3-15-2-406, Takaidonishi, Suginami-ku Tokyo (JP)**
Inventor: **Tanaka, Kunio, Nishihachioji-Haitsu C-7-9, 711 Sandahigashi-cho, Hachioji-shi Tokyo (JP)**

(74) Representative: **Billington, Lawrence Emlyn et al, HASELTINE LAKE & CO Hazlitt House 28 Southampton Buildings Chancery Lane, London WC2A 1AT (GB)**

(54) **Method and apparatus for controlling entry of information by coordinate input device.**

(57) Disclosed are a method and apparatus for controlling the entry of information by a coordinate input device having designating means and a tablet (13a), wherein the tablet (13a), is capable of entering information other than coordinates by designating an information input zone MN provided on the coordinate input device, the latter being of the type which produces an output indicative of the coordinates of a position designated on the surface of the tablet (13a), by the designating means. The method includes steps of specifying the position of an information input zone MN, on the surface of the tablet (13a) by entering the coordinates of the information input zone MN, and discriminating whether coordinates produced as an output by the tablet (13a), indicative of a position designated by the designating means correspond to the specified position of the information input zone MN.

(A)    (B)

METHOD AND APPARATUS FOR CONTROLLING ENTRY OF

INFORMATION BY COORDINATE INPUT DEVICE

This invention relates to a method and apparatus for controlling the entry of information performed by a coordinate input device such as a tablet,

A tablet is an input device having a digitizing function for discriminating positions designated by a pen, and finds use in such devices as enter characters and the like. A tablet makes it possible to enter the positions of points located on a drawing or other graphic even if the drawing does not indicate dimensions in writing. This is accomplished merely by placing the drawing on the tablet surface and designating the desired point with the pen, whereby the position of the point is entered into memory directly from the drawing. It would be very convenient if such a tablet could be used in programming for the preparation of an NC (numerical control) tape directly from a design drawing, and it is to such concept that the present invention appertains.

When using a tablet as a graphic input device, it is conventional practice to use the tablet to enter the points on the drawing and to use a keyboard or the like to enter other information, such as the necessary control information. When a large quantity of control information is to be entered, however, or when it is required to enter information of a special nature, a general-purpose keyboard cannot be used. In the prior art, therefore, specialized keyboards must be manufactured for use in certain situations, leading to higher costs. Another disadvantage is that the tablet and keyboard used are provided at different locations, so that the operator must move back and forth between these locations to input information. The conventional arrangement therefore exhibits poor operability and makes it difficult to enter information at a rapid rate.

According to one aspect of the invention there is provided a method of controlling the entry of information by a coordinate input device, wherein a tablet enters predetermined information via the coordinate input device which produces an output indicative of the coordinates of a position designated on the surface of the tablet by designating means, which method comprises the steps of:

(a) specifying the position of an information input zone provided on the surface of the tablet by entering the coordinates of said information input zone, and

(b) discriminating whether coordinates produced as an output by the tablet indicative of a position designated by the designating means correspond to the specified position of the information input zone, an input of said information being identified when correspondence is achieved.

According to another aspect of the invention there is provided an apparatus for controlling the entry of information by a coordinate input device having coordinate designating means and a tablet, wherein the tablet is operable to enter predetermined information via the coordinate input device which produces an output indicative of the coordinates of a position designated on the surface of the tablet by the designating means, which apparatus comprises:

arithmetic means for computing positional information indicative of an information input zone provided on the surface of the tablet, from coordinates specifying the information input zone produced as an output by said tablet in an information input setting mode, and

discrimination means for identifying designation of the information input zone by the designating means by comparing, in a data input mode, coordinates produced as an output by the tablet and the computed positional information.

An embodiment of the present invention may provide a method and apparatus for controlling the entry of information performed by a coordinate input device, through which control information can be entered by utilizing a tablet.

An embodiment of the present invention may provide a method and apparatus for controlling the entry of information performed by a coordinate input device, through which it is possible to set an

information input zone on a tablet and to change the information input zone.

An embodiment of the present invention may provide a method and apparatus for controlling the entry of information performed by a coordinate input device, through which the entry of both control information and coordinate values is performed by using a tablet, thereby making it possible to lower the cost and simplify the arrangement of the associated equipment.

An embodiment of the present invention may provide a method and apparatus for controlling the entry of information performed by a coordinate input device, through which the entry of both control information and coordinate values is performed by using a tablet, thereby facilitating the input operation.

An embodiment of the present invention may provide a method and apparatus for controlling the entry of information performed by a coordinate input device, through which an information input zone can be set on a tablet location not covered by a drawing or graphic the coordinates whereof are to be entered by the tablet.

These and other possible features of an embodiment of the invention may be attained whilst providing a method and apparatus for controlling the entry of information by a coordinate input device having coordinate designating means and a tablet, wherein the tablet enters predetermined

-4-  0088565

information via the coordinate input device of the type which produces an output indicative of the coordinates of a position designated on the surface of the tablet by the designating means. The method comprises specifying the position of an information input zone provided on the surface of the tablet by entering the coordinates of the information input zone, and discriminating whether coordinates produced as an output by the tablet indicative of a position designated by the designating means correspond to the specified position of the information input zone, an input of the information being identified when correspondence is achieved. The apparatus for practicing the above method comprises arithmetic means for computing positional information indicative of an information input zone provided on the surface of the tablet, from coordinates specifying the information input zone produced as an output by the tablet in an information input setting mode, and discrimination means for identifying designation of the information input zone by the designating means by comparing, in a data input mode, coordinates produced as an output by the tablet and the computed positional information.

Other features and advantages of the present embodiments of invention will be apparent from the following description taken in conjunction with the accompanying drawings, in which like reference characters designate the same or similar parts throughout the figures thereof.

## BRIEF DESCRIPTION OF THE DRAWINGS

Fig. 1 is a perspective view showing the general features of a coordinate input system and is useful in describing the present invention;

Fig. 2 is a schematic view showing the external appearance of a tablet input device included in the system of Fig. 1;

Fig. 3 is an enlarged, top view of a cursor unit included in the system of Fig. 1;

Fig. 4 is a flowchart for describing, in general terms, the creation of numerical control data by the system illustrated in Fig. 1;

Figs. 5 and 6 are plan views showing examples of displays presented on the CRT of a graphic display device included in the system of Fig. 1;

Figs. 7A and 7B are plan views of a tablet and drawing which are useful in describing an operation for setting an information input zone in accordance with the present invention;

Figs. 8A through 8C are illustrative views of menues for designating the size of an information input zone as well as the boundaries of areas which constitute the information input zone;

Fig. 9 is a plan view showing another example of a display presented on the CRT of the graphic display device included in the system of Fig. 1;

Fig. 10 is an illustrative view showing the details of a menu depicted in Fig. 8;

Figs. 11 and 12 are diagrams useful in describing numerical control graphic data created in a point mode of operation according to the present invention;

Figs. 13, 14, and 15 are diagrams useful in describing numerical control graphic data created in a cutting mode of operation according to the present invention; and

Fig. 16 is a block diagram of circuitry for practicing the setting of an information input zone according to the present invention.

Reference will now be had to the accompanying drawings to describe a method and apparatus for controlling the entry of information according to the present invention for a case where the invention is applied to a system designed to create NC, or numerical control, data. The detailed construction and operation will become clear in the course of describing the processing required up to the final creation of the NC data.

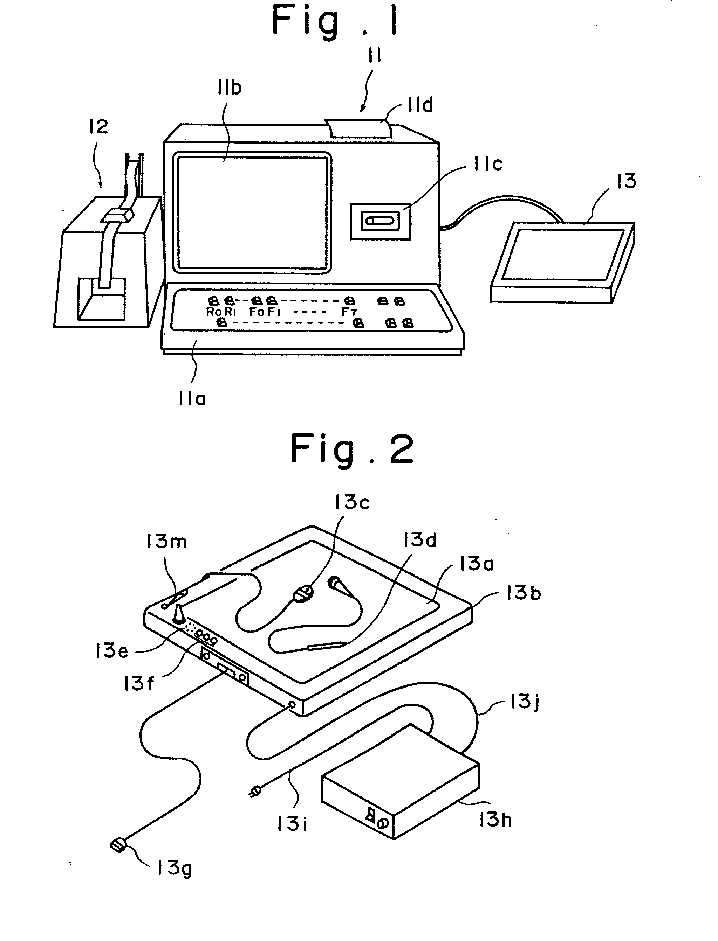

Fig. 1 is a view showing the general features of an NC data preparation system to which a coordinate input method according to the present invention can be applied. The system includes the main body 11 of an apparatus for creating NC data. The main body 11 comprises a keyboard 11a having a multiplicity of keys, a graphic display device 11b, a magnetic tape unit 11c

for loading a magnetic tape cassette, a printer 11d, and a control unit, not shown. The latter is constituted by a microcomputer which executes processing for the input and output of information, for digitizing and for the creation of NC data, all executed by means of a tablet described hereinbelow, based on a system program stored previously in memory means such as a ROM (read-only memory). The mulitplicity of keys provided on the keyboard 11a are for responding to prompts which appear on the system CRT, for designating system program loading, and for entering NC data. The graphic display device 11b displays, in graphical form, coordinate values obtained by digitization of positions designated by the tablet, as well as input data, numerical values, NC data and various messages or prompts for conversational interaction with the operator. The magnetic tape unit 11c is used to enter a system program into the main body of the NC data creating apparatus 11. By way of example, when using a tablet to enter coordinate values directly from a drawing and prepare NC data, the software (system program) for digitizing processing must be fed into the main body 11. This is done by selecting the magnetic tape cassette containing the digitizing program, and loading the cassette into the magnetic tape unit 11c. To read the tape into the system, the operator need only touch a load button on the keyboard 11a after the cassette has been set in the tape unit llc. The printer lld is adapted to print out characters which appear on the screen of the graphic display device llb, data punched in a paper tape, described later, and information which has been written into the loaded magnetic tape.

The system also includes a paper tape reader/puncher 12 for preparing an NC tape by punching a paper tape with perforations indicative of the NC data prepared by main body 11, and for reading NC or other data which has already been punched into an NC tape. The system tablet, designated at 13, comprises a board which uses the principle of electromagnetic induction to enter data. By relying upon a field generating device such as a cursor unit or stylus pen as means for designating coordinates, the tablet 13 is operable to input positional coordinates from a drawing laid on the tablet surface, these coordinates being fed into the main body 11 as an input thereto.

The perspective view of Fig. 2 shows the external appearance of the tablet 13 in greater detail. The tablet 13 comprises a tablet main body or board 13a, a tablet cover 13b, a cursor unit 13c, a stylus pen 13d, a buzzer 13e, a group of lamps 13f indicating, e.g., coordinate input mode and introduction of power, an input/output connector for connecting the tablet 13 to the main body 11, a power unit 13h for supplying the table body 13a with D.C. power, an A.C. cable 13i for connecting the power unit 13h to an A.C. source, a D.C.

cable 13j for the connection between the tablet body and power unit, and a pen stand 13m for holding the stylus pen 13 when not in use. The cursor unit 13c or stylus pen 13d is used to enter coordinate and other data.

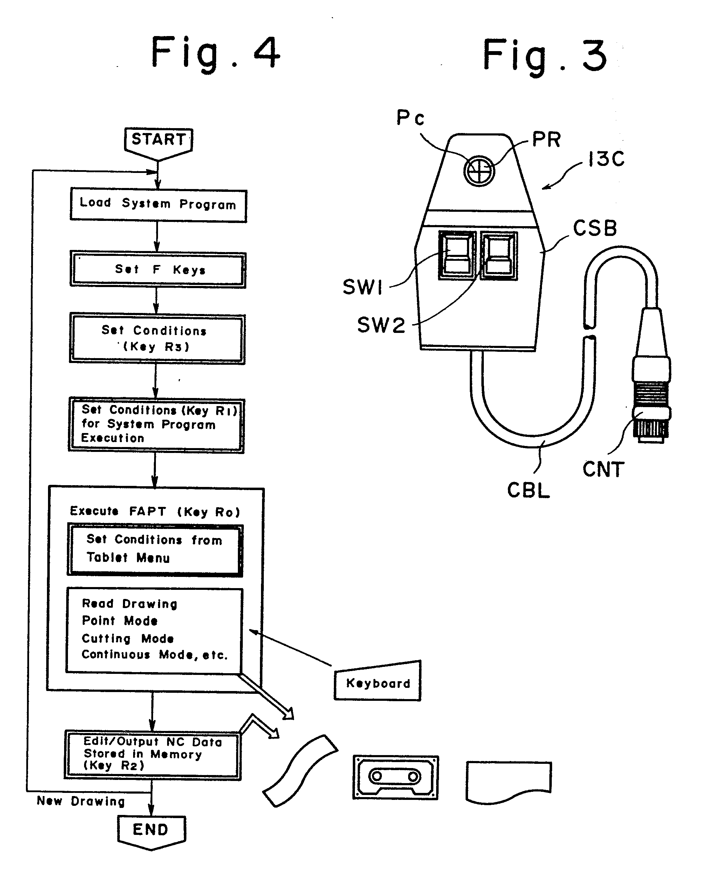

The details of the cursor unit 13c are illustrated in the enlarged view of Fig. 3, in which a top view of the cursor unit is shown. The cursor unit 13c has a main body CSB, first and second switches SW1, SW2, a position reader PR having a cross-hair arrangement, a connector CNT and a cable CNT leading from the connector CNT to the main body CSB. To enter the coordinates of a point, the intersection Pc of the cross hairs provided on the position reader PR are aligned with the desired point on a drawing laid on the tablet body, followed by depressing the first switch SW1 or second switch SW2.

A flowchart for describing how an NC tape is prepared is depicted in Fig. 4. The procedure may be broadly classified into operations of preprocessing, data input, NC data editing and data output. Reference will now be had to Fig. 4 to describe the general features of NC data creation and output.

(1) System loading step

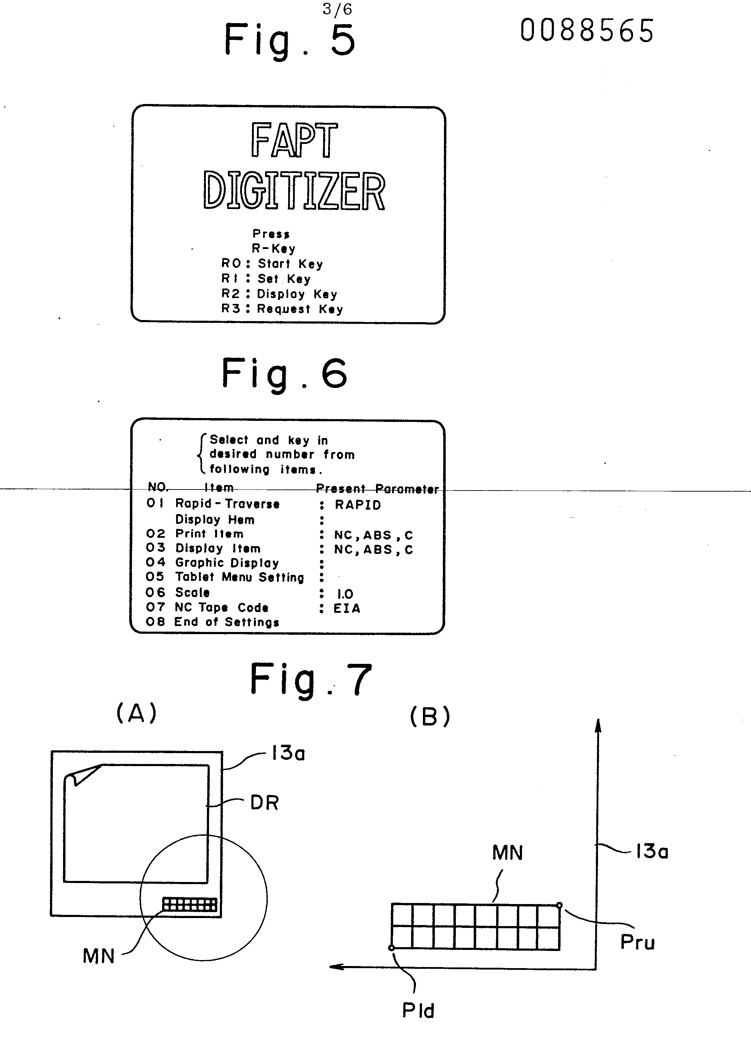

First, following the introduction of power, the operator sets the magnetic tape cassette containing the prescribed software (system program) in the magnetic tape unit 11c (Fig. 1) and touches the load button on the keyboard 11a to store the system program in a main memory incorporated within main body 11 of the system. This causes the title (e.g. FAPT DIGITIZER) of the system program, as well as a prompt calling for pressing of an R-key, to appear on the screen of the graphic display device 11b, as shown in Fig. 5.

(2) F-Key setting step

The keyboard 11a includes an array of eight F-keys ($F_0$ to $F_7$) which remain locked in the on state when depressed. The operator, by setting the desired F-keys in the on (depressed) or off state, selects the operating mode of the tablet 13 as well as the output device to be used. Table I, shown below, gives the function and meaning of each F-key, as well as the associated subject matter. It should be noted that the F-keys can be set prior to the system loading step if desired.

(3) Step for setting initial conditions

After setting the F-keys, the operator sets the conditions for the preparation of an NC tape. Specifically, four ($R_0$ to $R_4$) of the abovementioned R-keys are provided on the keyboard 11a. First, the operator depresses the $R_3$ key, causing the prompt "REQUEST = " to appear at the lower left side of the CRT screen. The operator responds to the prompt by setting and entering conditions in accordance with predetermined rules, and then depresses an NL key,

TABLE I

| Key Symbol | Function | Subject | Meaning |
|---|---|---|---|
| F<sub>o</sub> | Input | Test Mode | To constantly display coordinate values sensed by tablet |
| F<sub>1</sub> | " | Input Data Confirmation Mode | To confirm coordinate values sensed by tablet, and to change coordinate values when required |
| F2 | Output | Output Mode | When F2 is ON, to establish step feed during NC data output and enable both insertion and deletion of data |
| F<sub>3</sub> | ". | CRT Characters | To display list of, e.g., NC data, on CRT |
| F4 | " | CRT Graphics | To display graphically, on CRT, coordinate values entered by tablet |
| F5 | " | Printer | To print out, via printer, list of results of FAPT execution |
| F6 | " | Paper Tape | To punch NC command data into paper tape |
| F7 | " | MT Cassette | To write NC command data into magnetic tape cassette |

0088565

located on the keyboard 11a, two consecutive times. This restores the CRT screen to the display depicted in Fig. 5 and ends the condition setting processing.  The conditions which can be set are, e.g., machine tool parameters, input/output units (English or metric system, etc.) and special codes.  The machine tool parameters may include the name of each axis of movement (X, Y, Z...), the minimum unit set for each axis of movement, and G-function instruction codes (indicating quick feed, linear cutting feed, clockwise and counter-clockwise circular interpolation, absolute command and incremental commands, etc.).

(4)   Step for setting execution conditions

Next, the operator depresses the $R_1$ key to set various conditions for system program execution. The information shown in Fig. 6 will appear on the CRT screen of the graphic display device 11b when the $R_1$ key is depressed.  Now, in accordance with the conditions which are desired to be set, the operator may select one of the eight items numbered 01 to 08 shown in Fig. 6.  When one of the item numbers is keyed in, a prompt appears on the display screen for each of various conditions to be set with regard to the entered item number.  When the operator has successively entered the set conditions in response to the prompts, the entry of conditions with regard to the particular item number ends.  The operator then depresses the NL key a number of times in succession to return the CRT screen to the display shown in Fig. 6, upon which he may set the conditions for a new item number.  Table II shown below gives the meaning of each numbered item.

TABLE II

| No. | Item | Meaning |
|---|---|---|
| 1 | Rapid-traverse Path Display | To designate whether rapid-traverse motion should be displayed |
| 2. | Print Item | Item to be printed |
| 3. | Display Item | Item to be displayed on CRT |
| 4. | Graphic Display | Scale and position of graphic displayed on CRT |
| 5. | Tablet Menu position | To designate menu position on tablet |
| 6. | Scale | To designate scale and scale reduction ratio for read coordinate values |
| 7. | NC tape code | NC tape output code |
| 8. | | End of setting operation |

In Table II, Item No. 1 designates whether rapid-traverse motion, namely the tool path in the rapid-traverse mode, is to be displayed on the CRT.  Entering "RAPID" opposite this item number will cause the path to be displayed.  Item Nos. 2 and 3 are for selecting print and display items, respectively.  Prescribed outputs can be printed or displayed by entering the parameters shown in the left column of Table III, included hereinbelow.  In order for an output to be capable of print out or display, it is necessary that either key $F_2$ or key $F_3$ of the eight F-keys be placed in the ON state.

According to a feature of the present embodiment of the invention, Item No. 5 is provided for setting a menu position (information input zone) on the tablet.  Since the tablet has the capability of identifying designated points, it can also be made to function as a switch or
as information input keys if a portion of the tablet
surface is partitioned into a plurality of areas and
each area is assigned a specific meaning. For example,
if a certain area is set to serve as an absolute
command area, designating said area will cause the NC
data creating apparatus to create NC data in the form
of absolute values from then on.

TABLE III

| Parameter | Meaning |
|---|---|
| ·NC | To output content of created NC tape |
| ABS | To output absolute value for each axis |
| C · | To output center and radius of circle during circular interpolation |
| PART | To output content of created part program |

To enter graphic data, a design drawing is laid on
the tablet surface and the position of a predetermined
point on the drawing is entered by designating the
point. When a portion of the tablet surface
(specifically an information input zone described
below) which is to made to function as a switch or
information input key is fixed in area or position,
there will be occasions where said information input
zone of the tablet surface is covered by the graphic
because of the size of the design drawing or the type
of design. In such case, the tablet will not be able
to discriminate whether a certain area on the tablet
surface designated by a pen or the like is a point on
the design or an area which is to function as a switch
or information input key. While there are also instances where the graphic itself will not overlay the information input zone on the tablet surface, inconveniences can still be encountered because this part of the tablet surface may be covered by a blank portion of the drawing.

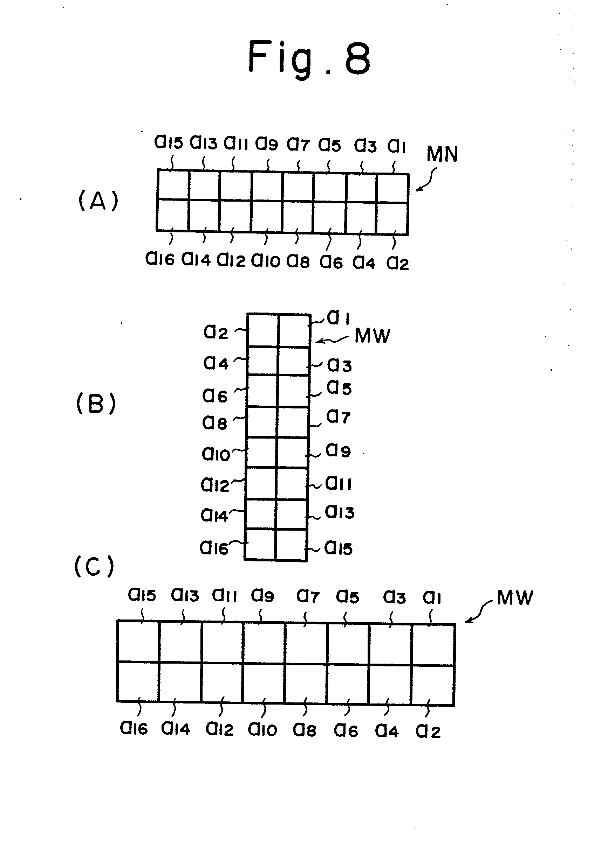

In view of the foregoing problem, and according to a feature of the present/invention, any area on the embodiment of the tablet surface can be set as an information input zone through use of Item No. 5 mentioned above. This will now be described with reference to Fig. 7, which is useful in explaining how an information input zone is set, and with reference to Fig. 8 showing examples of menu configurations for designating the size of the information input zone, the boundaries of areas $a_1$ through $a_{16}$ constituting the zone, and the meaning of each area. A menu MN, printed on, e.g., white paper or wax paper, may have a horizontal configuration composed of 16 areas $a_1$ through $a_{16}$ in a two-row by eight-column array, as depicted in Figs. 8A and 8C, or a vertical configuration composed of 16 areas $a_1$ through $a_{16}$ in an eight-row by two-column array, as shown in Fig. 8B. The size of an information input zone depends upon the size of the menu and can be set at will. The menu MN in Fig. 8C, for example, takes up more space than the menu in Fig. 8A. The numbers of rows and columns also can be set as desired.

An information input zone is set through the following sequence, described with reference to Fig. 7, in which (B) is an enlarged view of the portion enclosed by the circle in (A):

Initially, a drawing DR is laid on the tablet surface 13a and affixed thereto by adhesive tape or the like, after which the menu MN is similarly laid on and affixed to the tablet surface 13a, at a portion thereof not covered by the drawing DR, as shown in Fig. 7. When the operator selects Item No. 5 (Fig. 6) under these conditions, the following prompt appears on the CRT screen:

UPPER RIGHT = □ , □

thereby inquiring about the position of the upper right portion of the menu MN. The operator responds by positioning the cross-hair intersection $P_c$ of the position reader, provided on the cursor unit 13c (Fig. 3), at the upper right corner $P_{ru}$ of the menu MN, shown in Fig. 7B, followed by depressing one of the switches SW1, SW2. This causes the X, Y coordinates $(X_1, Y_1)$ of the point $P_{ru}$ to be fed into the system. Next, the following prompt is displayed:

LOWER LEFT = □ , □

calling for the entry of the point $P_{ld}$ at the lower left corner of the menu MN. As described above, the operator now places the cross-hair intersection $P_c$ of the cursor unit 13c at the point $P_{ld}$ and depresses one of the switches SW1, SW2 to enter the X, Y coordinates $(X_2, Y_2)$ of the point $P_{ld}$.

Distance $x_w$ along the X axis and distance $y_w$ along the Y-axis are expressed by the following, respectively:

$$x_w = X_1 - X_2, \qquad y_w = Y_1 - Y_2 \quad \cdots \cdots \quad (1)$$

Accordingly, the menu will be of the horizontal type if $x_w \geq y_w$ holds, and of the vertical type if $x_w < y_w$ holds. Thus the type of menu is decided by the magnitudes of $x_w$, $y_w$. If a horizontal menu is set in advance to have two rows and eight columns and a vertical menu is set in advance to have eight rows and two columns, by way of example, then, in the case of Fig. 7, $x_w > y_w$ will hold (horizontal menu), and the horizontal and vertical dimensions x', y', respectively, of each area will be:

$$x' = (X_1 - X_2)/8, \quad y' = (Y_1 - Y_2)/8 \quad \cdots \quad (2)$$

thereby specifying the boundaries of the areas $a_1$ through $a_{16}$. This ends the processing for setting an information input zone.

Returning to Table II, Item No. 6 is for designating scale and paper reduction ratio for read coordinate values, and Item No. 7 is for entering an NC tape output code, allowing selection and entry of either an EIA code or ISO code.

(5) Coordinate Value Input Step

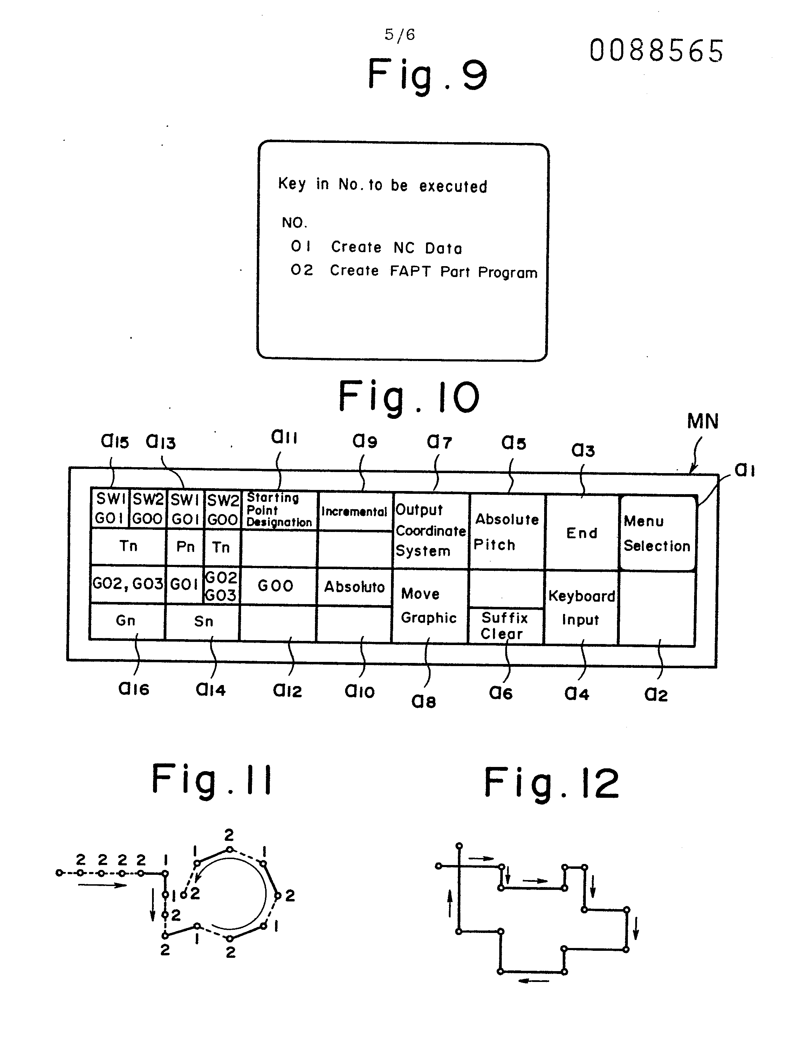

When the condition setting processing for execution of the system program is completed by the foregoing operations, the system is ready to accept entry of various data for NC tape preparation. It should be noted that the display of Fig. 5 reappears on the CRT with the conclusion of processing in step (4) (i.e., by entering Item No. 8). The operator now touches key $R_o$ on keyboard 11a to initiate processing in accordance with the system program. More specifically, with a touch of key $R_o$, the CRT displays a prompt calling for either NC data (NC tape) creation or part program creation, as shown in Fig. 9. The operator enters "01" to execute processing for the creation of NC data, or "02" to execute processing for the creation of a part program. The following discussion will deal with selection of "01", namely NC data creation.

Next, the operator enters various data for NC data creation. Such data may consist of (a) mode data such as point mode, linear cutting mode and circular arc cutting mode, and (b) point data relating to points on a drawing. The mode data is entered by designating, through use of the cursor unit, a predetermined area on the information input zone established in step (4).

Fig. 10 illustrates the details of a horizontal-type menu MN used in setting an information input zone, in which each area is assigned boundary lines and as well as a particular meaning. Table IV, shown below, indicates the meaning of each of the areas $a_1$ through $a_{16}$. Area $a_1$ is a menu selection zone which must be designated by the operator before a new area can be selected. In other words, the operator, after designating the menu selection area $a_1$, may then select

any other area, but must re-designate area $a_1$ before going to a new area.  For example, when the operator wishes to produce an output of NC data in the form of an incremental value, he first designates the menu selection area $a_1$.  When the NC data creating apparatus acknowledges designation of the menu selection area $a_1$, the following message appears on the CRT screen:

ENTER ITEM NO.

If the operator now places the point $P_c$ of the position reader PR at approximately the center of the area $a_9$ and then depresses switch SW1 or SW2, subsequent coordinate input operations will create NC data in the form of incremental values.

Of the various modes mentioned above, the point mode is a mode in which points are entered one at a time to create cutting-feed/rapid-traverse NC data. Selecting the point mode makes it possible to enter points from a drawing by using the tablet.  In other words, assume that the operator selects area $a_{13}$ to establish the point mode, places the cross-hair intersection $P_c$ of the cursor unit 13c on prescribed position on the tablet surface and presses the first switch SW1 or second switch SW2 (Fig. 3).  This will create an item of NC data for rapid-traverse or cutting-feed movement from the previous position to the just indicated position.  When the operator restores switch SW1 or switch SW2 to the original position, moves the cursor unit to another position on the design

TABLE IV

| Area | Meaning | Remarks |
|---|---|---|
| al | Menu Selection | Designated when areas a2 to al6 are used as menu |
| a2 | Blank | |
| a3 | End | Selected when FAPT execution is to be ended |
| a4 | Keyboard Input | Selected when NC data are to be entered from keyboard |
| a5 | Sampling Pitch | Selected when changing pitch at which points are sampled from tablet |
| a6 | Blank | |
| a7 | NC Data Coordinate Designation | Selected when setting origin and axis of NC data coordinate system |
| a8 | Drawing Movement | Selected before moving drawing |
| a9 | Incremental | Selected when output of incremental NC data is to be produced |
| al0 | Absolute | Selected when output of absolute NC data is to be produced |
| all | Starting Point Designation | Selected when entering position of tool starting point |
| al2 | Rapid-traverse Mode | Selected when subsequently arriving read coordinate values are output in rapid-traverse mode |
| al3 | Point Mode | Selected when subsequently arriving read coordinate values are output in linear cutting or rapid-traverse mode |
| al4 | Cutting Mode | Selected when subsequently arriving read coordinate values are output in linear cutting or circular-arc cutting mode |
| al5 | Continuous Mode | Selected when subsequently arriving read coordinate values are output continuously in rapid-traverse or linear cutting mode |
| al6 | Circular Arc Mode | Selected when circular arc is to be produced from two previous points and present point and then output in circular-arc cutting mode |

0088565

drawing and then again presses switch SW1 or switch SW2, this creates an item of rapid-traverse or cutting-feed NC data for movement up to said position. By repeating this operation, the operator may enter successively an item of cutting-feed/rapid-traverse data with respect to each separately entered position (i.e., the coordinate values of the position). Note that when area $a_{12}$ is selected, an item of rapid-traverse NC data is created regardless of which of the first and second switches SW1, SW2 is pressed. When area $a_{13}$ is selected, however, an item of cutting-feed NC data is created when switch SW1 is pressed, and an item of rapid-traverse NC data when switch SW2 is pressed.

Fig. 11 shows an example of a graphic which is entered in the point mode by selecting area $a_{13}$ and designating a series of points on a drawing one after another using the cursor unit while selectively pressing switch SW1 or SW2 at each point. In Fig. 11, the dotted lines indicate the creation of NC data for rapid-traverse, while the solid lines indicate the creation of NC data for linear cutting. Each numerical value "1" indicates when the first switch SW1 was pressed, and each numerical value "2" shows when the second switch SW2 was pressed.

As opposed to the point mode, the cutting mode is one in which an item of linear cutting data or circular arc cutting data is created on the basis of each

0088565

successively entered point (coordinate values).
Selecting the cutting mode of operation makes it
possible to enter points from a drawing by using the
tablet 13a. The following will serve as examples:

(a) To create NC data for linear cutting: The
operator selects area $a_{14}$, aligns the cross-hair
intersection $P_C$ of the cursor unit 13c with a
prescribed position on the tablet 13a and presses
switch SW1. This causes the creation of an item of
linear cutting data for movement from the immediately
preceding position designated by the cursor unit 13c to
the newly designated position. It the operator then
moves the cursor unit 13c to another position on the
tablet surface and presses switch SW1, then this will
again produce an output of linear cutting data for
movement to said position. Repeating this operation
will create NC data for cutting a workpiece by causing
a tool to move along a contour of the kind shown in
Fig. 12.

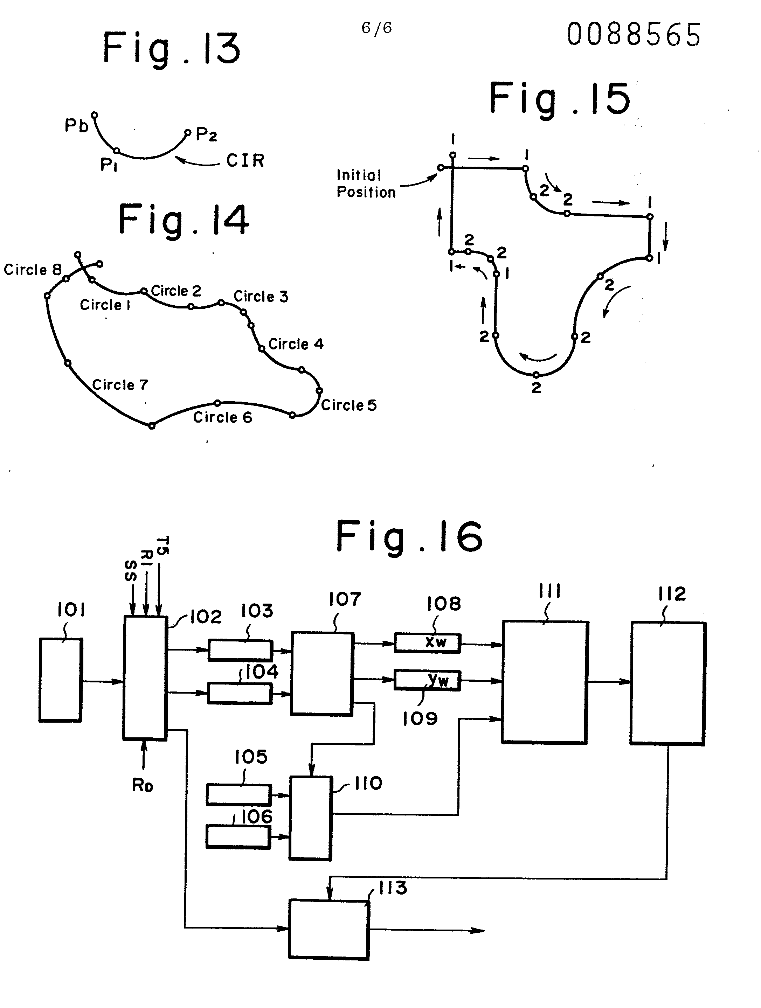

(b) To create NC data cutting circular arcs: The
operator selects area $a_{16}$, aligns the cross-hair
intersection $P_C$ of the cursor unit 13c with a
prescribed position P1 (Fig. 13) on the tablet 13a,
presses switch SW2, moves the cursor unit 13c to
another position p2 on the tablet and again presses
switch S2. The entry of the abovementioned two points
forms a circular arc CIR from an immediately preceding
point Pb and the two newly entered points P1, P2,

thereby creating NC data for circular interpolation. By repeating the above operation, the operator creates successive items of NC data for interpolating circular arcs connected as shown in Fig. 14. The selected arcs each pass through three points. Whether an arc is a clockwise or counter-clockwise arc is determined automatically by the points entered. If area $a_{16}$ is selected, then circular arc cutting data will be created regardless of whether switch S1 or S2 is pressed.

(c)  To create NC data for mixed linear and arc cutting by combining operations (a) and (b):  Fig. 15 illustrates a graphic based on NC data for mixed linear and arc cutting, created by selecting area $a_{14}$ and combining operations (a) and (b).  In Fig. 15, each numeral "1" indicates when the switch SW1 was pressed after aligning the cross-hair intersection $P_c$ of the cursor unit with the corresponding point.  Likewise, each numeral "2" indicates when the switch SW2 was pressed after aligning the cross-hair intersection $P_c$ of the cursor unit with the corresponding point.

(6)  Recording step

The foregoing steps create NC data and store the data in a data memory located internally of the main body 11 of the apparatus for NC data creation. The next step is to preserve the items of created data by reading them out of the data memory and either punching them into a paper tape by way of the tape puncher recording them on magnetic tape.

Reference will now be had to Fig. 16 to describe a block diagram of circuitry for practicing the setting of an information input zone according to the present invention.

When Item No. 5 is entered from the keyboard in the above-described step (4), namely in the state established by pressing the $R_1$ key, this sends a signal T5, shown in Fig. 16, to logical "1" to establish an information input zone set enable state and to cause the inquiry "UPPER RIGHT = ☐ , ☐ " to appear on the CRT screen, prompting the operator to enter the position at the upper right corner of an information input zone. It will be recalled that the menu MN is affixed to the tablet surface at any location thereon not covered by a drawing. The operator responds to the above message by taking the cursor unit 13c (Fig. 3) connected to the tablet 101, placing the cross-hair intersection $P_c$ at the upper right corner $P_{ru}$ (Fig. 7B) of the information input zone and then pressing either the first switch SW1 or second switch SW2 (Fig. 3). This generates a switching signal SS which causes the X, Y coordinates $(X_1, Y_1)$ of the point $P_{ru}$ to be stored in a first register 103 through a multiplexer 102. Next, when the prompt "LOWER LEFT = ☐ , ☐ " appears on the CRT screen calling for entry of the position at the lower left corner of the information input zone, the operator aligns the cross-hair intersection $P_c$ with the lower

left corner $P_{1d}$ and presses either switch SW1 or switch SW2, just as described above, thereby storing the X, Y coordinates $(X_2, Y_2)$ in a second register 104 through the multiplexer 102. It will be assumed that a third register 105 stores the numbers of rows and columns of a horizontal menu, and that a fourth register 106 stores the numbers of rows and columns of a vertical menu.

When the operator enters the coordinates of the point at the upper right corner and of the point at the lower left corner, a first processor 107 performs the arithmetic operations:

$$x_w = X_1 - X_2, \qquad y_w = Y_1 - Y_2$$

stores the results $x_w$, $y_w$ in respective fifth and sixth registers 108, 109, discriminates the magnitudes of $x_w$ and $y_w$ and sends the result of the discrimination operation to a gate 110. When $x_w \geq y_w$ holds, the numbers of rows and columns (m,n) of the horizontal menu are fed into a second processor 111 via the gate 110. When $x_w < y_w$ holds, the numbers of rows and columns (n,m) of the vertical menu are similarly applied to the second processor 111 through the gate 110. Using the information input zone horizontal dimension $x_w$ and vertical dimension $y_w$ stored in the fifth and sixth registers 108, 109, as well as the numbers of rows and columns (m,n), the second processor 111 performs the arithmetic operations:

$$x' = x_w/m, \qquad y' = y_w/m$$

to compute the horizontal dimension x' and vertical dimension y' of each area in the information input zone, as well as boundary line information for each area. The results are stored in a memory 112. This ends the processing for setting an information input zone.

The arrangement of Fig. 16 operates in the following manner when information is entered by designating a predetermined area in the information input zone. In step (5) (key $R_0$ depressed), coordinates produced as an output by the tablet are applied to a discriminator 113 via the multiplexer 102. The discriminator 113 compares these coordinates with the boundary line information of the menu selection area $a_1$ stored in memory 112 and, when the coordinates have values which fall within the boundaries of area $a_1$, recognizes that the designated point is within area $a_1$, namely that the menu selection area $a_1$ has been designated. Next, when the operator designates a point any other area of the information input zone by means of the cursor unit, the discriminator 113 compares the coordinates of the designated point with the boundary information stored in memory 112 and determines the area to which the point belongs. The discriminator 113 then produces an output of information conforming to the designated area, in accordance with the result of the discrimination operation. If the coordinates arriving from the tablet do not fall within any of the boundaries stored in the memory 112, however, then these coordinates are treated as graphic coordinates on a drawing and are delivered intact.

In accordance with the present /invention as embodiment of the described and illustrated hereinabove, not only coordinates but any form of information can be entered from a tablet.  This reduces system costs and makes it much easier to enter information.

It has been described that an area for generating the information corresponding thereto cannot be chosen until after the menu selection area $a_1$ is designated. It should be noted, however, that the invention is not limited to such an arrangement, for the menu selection area may be deleted and an arragement adopted wherein each area can be designated directly to enter the corresponding information.

As many apparently widely different embodiments of the present invention can be made without departing from the spirit and scope thereof, it is to be understood that the invention is not limited to the specific embodiments thereof except as defined in the appended claims.

Disclosed are a method and apparatus for controlling the entry of information by a coordinate input device having designating means and a tablet 13a, wherein the tablet 13a is capable of entering information other than coordinates by designating an information input zone MN provided on the coordinate input device, the latter being of the type which produces an output indicative of the coordinates of a position designated on the surface of the tablet 13a by the designating means. The method includes steps of specifying the position of an information input zone MN on the surface of the tablet 13a by entering the coordinates of the information input zone MN, and discriminating whether coordinates produced as an output by the tablet 13a indicative of a position designated by the designating means correspond to the specified position of the information input zone MN.

CLAIMS:

1.   A method of controlling the entry of information by a coordinate input device, wherein a tablet enters predetermined information via the coordinate input device which produces an output indicative of the coordinates of a position designated on the surface of the tablet by designating means, which method comprises the steps of:

(a)   specifying the position of an information input zone provided on the surface of the tablet by entering the coordinates of said information input zone, and

(b)   discriminating whether coordinates produced as an output by the tablet indicative of a position designated by the designating means correspond to the specified position of the information input zone, an input of said information being identified when correspondence is achieved.

2.   The method according to claim 1, in which step (a) includes a step of entering the coordinates of the information input zone by designating the position of said information input zone by the designating means.

3.   The method according to claim 1, in which step (a) includes a step of computing boundary line information, indicative of boundaries of the information input zone, from the entered coordinates.

4.   The method according to claim 3, in which the computing step is a step for computing boundary line information, indicative of a plurality of areas constituting the information input zone, from the entered coordinates.

5. The method according to claim 4, in which the computing step includes steps of determining, from the entered coordinates, whether the information input zone has a vertical or horizontal configuration, and computing boundary line information indicative of said plurality of areas based on results of said determination step and on the entered coordinates.

6. The method according to claim 5, in which the determination step includes steps of computing, from the entered coordinates, horizontal and vertical dimensions of the information input zone, and comparing said horizontal and vertical dimensions.

7. The method according to claim 1, in which step (a) includes steps of computing, from the entered coordinates, boundary line information indicative of boundaries of the information input zone, and storing the computing boundary line information in memory.

8. The method according to claim 1, in which step (b) is a step for identifying an input of said information when the coordinates produced as an output by the tablet correspond to the specified position of the information input zone, and identifying an input of coordinates when said coordinates do not correspond to said information input zone.

9. The method according to claim 3, in which step (b)

0088565

is a step for comparing the computed boundary line information and the coordinates produced as an output by the tablet.

10. An apparatus for controlling the entry of information by a coordinate input device having coordinate designating means and a tablet, wherein the tablet/enter <sup>is operable to</sup> predetermined information via the coordinate input device which produces an output indicative of the coordinates of a position designated on the surface of the tablet by the designating means, which apparatus comprises:

arithmetic means for computing positional information indicative of an information input zone provided on the surface of the tablet, from coordinates specifying the information input zone produced as an output by said tablet in an information input setting mode, and

discrimination means for identifying designation of the information input zone by the designating means by comparing, in a data input mode, coordinates produced as an output by the tablet and the computed positional information.

11. The apparatus according to claim 10, in which said arithmetic means includes a memory for storing the positional information.

12. The apparatus according to claim 11, in which said discriminating means compares the information stored in said memory and coordinates produced as an output by the tablet.

# Fig . 1

# Fig . 2

# Fig. 4

```
START
  │
  ▼
Load System Program
  │
  ▼
Set F Keys
  │
  ▼
Set Conditions
(Key R3)
  │
  ▼
Set Conditions (Key R1)
for System Program
Execution
  │
  ▼
Execute FAPT (Key Ro)
  ┌──────────────────────┐
  │ Set Conditions from  │
  │ Tablet Menu          │
  └──────────────────────┘
  ┌──────────────────────┐
  │ Read Drawing         │
  │ Point Mode           │
  │ Cutting Mode         │
  │ Continuous Mode, etc.│
  └──────────────────────┘
  │
  ▼
Edit/Output NC Data
Stored in Memory
(Key R2)
  │
New Drawing
  ▼
END
```

Keyboard

# Fig. 3

Pc  PR  I3C  CSB  SWI  SW2  CNT  CBL

# Fig. 5

0088565

FAPT
DIGITIZER

Press
R-Key
RO: Start Key
RI: Set Key
R2: Display Key
R3: Request Key

# Fig.6

Select and key in
desired number from
following items.

| NO. | Item | Present Parameter |
|-----|------|-------------------|
| OI | Rapid-Traverse Display Hem | : RAPID : |
| O2 | Print Item | : NC, ABS, C |
| O3 | Display Item | : NC, ABS, C |
| O4 | Graphic Display | : |
| O5 | Tablet Menu Setting | : |
| O6 | Scale | : I.O |
| O7 | NC Tape Code | : EIA |
| O8 | End of Settings | |

# Fig.7

(A)

13a

DR

MN

(B)

MN

13a

Pru

Pld

# Fig. 8

(A)

$a_{15}$ $a_{13}$ $a_{11}$ $a_9$ $a_7$ $a_5$ $a_3$ $a_1$   MN

$a_{16}$ $a_{14}$ $a_{12}$ $a_{10}$ $a_8$ $a_6$ $a_4$ $a_2$

(B)

$a_1$   MW

$a_2$       $a_3$

$a_4$       $a_5$

$a_6$       $a_7$

$a_8$       $a_9$

$a_{10}$       $a_{11}$

$a_{12}$       $a_{13}$

$a_{14}$       $a_{15}$

$a_{16}$

(C)

$a_{15}$ $a_{13}$ $a_{11}$ $a_9$ $a_7$ $a_5$ $a_3$ $a_1$   MW

$a_{16}$ $a_{14}$ $a_{12}$ $a_{10}$ $a_8$ $a_6$ $a_4$ $a_2$

# Fig. 9

0088565

Key in No. to be executed

NO.
  01  Create NC Data
  02  Create FAPT Part Program

# Fig. 10

a15  a13  a11  a9  a7  a5  a3  MN  a1

| SW1 G01 | SW2 G00 | SW1 G01 | SW2 G00 | Starting Point Designation | Incremental | Output Coordinate System | Absolute Pitch | End | Menu Selection |
|---|---|---|---|---|---|---|---|---|---|
| Tn | | Pn | Tn | | | | | | |
| G02, G03 | G01 | G02 G03 | G00 | | Absoluto | Move Graphic | | Keyboard Input | |
| Gn | | Sn | | | | | Suffix Clear | | |

a16  a14  a12  a10  a8  a6  a4  a2

# Fig. 11

# Fig. 12

## Fig.13

Pb
P1 P2
CIR

## Fig.15

Initial Position

1 1
2 2
1
1
2 2
1 1
2
2 2
2

## Fig.14

Circle 8
Circle 1 Circle 2 Circle 3
Circle 4
Circle 7 Circle 5
Circle 6

## Fig.16

SS RI T5

101 102 103 104 107 108 Xw 111 112
109 Yw
RD
105 110
106
113

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | IBM TECHNICAL DISCLOSURE BULLETIN, vol. 18, no. 5, October 1975, pages 1589-1592, New York, USA P.L. GARDNER et al.: "Paper menus and keyboards for digitizing tablets" * Whole article * | 1-4,7-12 | G 06 F 3/033 |
| Y | IBM TECHNICAL DISCLOSURE BULLETIN --- | 5,6 | |
| Y | DE-A-2 656 393 (SIEMENS AG) * Figures 1-3; page 23, lines 17-26 * --- | 5,6 | |
| A | REGELUNGSTECHNISCHE PRAXIS, vol. 19, no. 9, September 1977, pages 265-271, München, DE. M. SHAHATA: "Dialogbedienung über Bildschirm und virtuelle Tastaturen bei der Bildkonstruktion" * Pages 265-268 * --- | 1-12 | **TECHNICAL FIELDS SEARCHED (Int. Cl. ³)** G 06 F |
| A | IBM TECHNICAL DISCLOSURE BULLETIN, vol. 21, no. 9, February 1979, pages 3481-3483, New York, USA I.F. CHANG: "Word input tablet with electronic keyboard function" * Whole article * --- -/- | 1-12 | |

The present search report has been drawn up for all claims

| Place of search | Date of completion of the search | Examiner |
|---|---|---|
| THE HAGUE | 07-06-1983 | BECKER K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

0088565
Application number

EP 83 30 1001

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | IBM TECHNICAL DISCLOSURE BULLETIN, vol. 21, no. 3, August 1978, pages 1246-1247, New York, uSA<br>I.D. JUDD et al.: "Interactive work station" * Whole article * | 1-12 | |

TECHNICAL FIELDS
SEARCHED (Int. Cl. ³)

The present search report has been drawn up for all claims

| Place of search<br>THE HAGUE | Date of completion of the search<br>07-06-1983 | Examiner<br>BECKER K.H. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& . member of the same patent family, corresponding
document

EPO Form 1503. 03 82